# EUROPEAN PATENT SPECIFICATION

(11) **EP 2 139 966 B1**
(45) Date of publication and mention of the grant of the patent: **17.08.2016**
(21) Application number: 08733069.2
(22) Date of filing: 02.04.2008
(51) Int. Cl.: C09J 123/08, C09J 191/06

(54) **HOT MELT ADHESIVE**
SCHMELZHAFTKLEBER
ADHÉSIF THERMOFUSIBLE

(30) Priority: 03.04.2007 US 732243
(43) Date of publication of application: 06.01.2010
(73) Proprietor: Henkel AG & Co. KGaA, 40589 Düsseldorf (DE)
(72) Inventor: GONG, Lie-Zhong, Bridgewater, NJ 08807 (US); HANER, Dale, L., Ringwood, NJ 07456 (US)
(86) International application number: PCT/US2008/059087
(87) International publication number: WO 2008/122028

(56) References cited:
- WO-A-92/08614
- WO-A-03/104348
- WO-A-2008/039901

## Description

### Field of the invention

The invention relates to low application temperature applied hot melt adhesives that comprises a vegetable derived wax and a paraffin wax.

### Background of the invention

Hot melt adhesives are applied to a substrate when molten, and then placed in contact with a second substrate. The adhesive cools and hardens to form a bond between the substrates. Hot melts are widely used for industrial adhesive applications such as product assembly and packaging. The latter include case and carton sealing.

Hot melts for packaging applications such as case and carton sealing are typically composed of a polymer, a diluent or tackifier, and a wax. One function of the wax component, due to its low molecular weight, is to lower viscosity. Currently used packaging adhesives comprise petroleum-derived waxes such as paraffin and microcrystalline wax. The lower molecular weight of paraffin wax makes it a primary choice when formulating low application temperature adhesives.

Recently, however, due to the limited supply of paraffin wax, attention has turned to the use of natural waxes. Of the natural waxes, the lowest cost materials are based on highly hydrogenated triglycerides Borsinger et al., U.S. Patent No. 6,890,982 B2, discloses hot melt adhesives containing a vegetable derived wax. The adhesive compositions of Borsinger et al. have a melt viscosity of from about 1000 to bout 5000 mPas (cps) at 177°C (350(°F)). The high levels of hydrogenation (low iodine values) are necessary to elevate the melting point closer to paraffin. Unfortunately, since triglycerides are of much higher molecular weight than paraffin - about 890 Da for the pure tristearate of glycerin, versus 430 Da for a typical paraffin wax, adhesives using highly hydrogenated triglycerides have higher viscosity making them unsuitable for application at low temperatures.

A need exists for hot melt adhesives that can be applied a low temperatures, i.e., that have an application viscosity that allows for application at low temperatures (at temperatures less than 149°C (300°F)), and that can be formulated with reduced dependency on the use of paraffin wax. The invention fulfills this need.

### Summary of the Invention

It is an object of the present invention to provide a low application temperature hot melt adhesive containing a vegetable derived wax. The adhesives of the invention may be used to bond one substrate to a second substrate after the adhesive has been applied to the substrate surface at a temperature of below 149°C (300°F) down to 93°C (200°F) or below. In one embodiment, the adhesive is formulated for application at a temperature of below about 138°C (280°F). In another embodiment, the adhesive Is formulated for application at a temperature of below about 121°C (250°F). In one embodiment, the adhesive compositions of the invention comprise a vegetable derived wax and a paraffin wax. In one preferred embodiment, a mixture of a soy wax and a paraffin wax is used.

The adhesive composition can be applied to articles such as paper, paperboard and the like to bond them together for use in consumer and other packaged goods applications.

Yet another embodiment of the invention provides articles manufactured using the hot melt adhesive of the invention. In a preferred embodiment the article is a packaging article.

Another aspect of the invention is directed to a method of sealing and/or making or forming a case, a carton, a tray, a box or a bag or other packaging article. These methods comprise using a low application temperature hot melt adhesive that comprises a soy wax. Also provided are articles manufactured using such soy wax-containing adhesives. Encompassed are cartons, cases, trays, bags and the like that can be used for packaging products. Such articles typically comprise cardboard or paperboard which has been adhered by such hot melt adhesives. The invention also provides packaged articles contained within a carton, case, tray or bag, in particular packaged food, wherein the carton, case, tray or bag comprises a soy wax-containing adhesive.

Yet another aspect of the invention is directed to a process for bonding a substrate to a similar or dissimilar substrate comprising applying to at least one substrate a molten low application temperature hot melt composition which comprises a soy wax and bonding said substrates together.

### Detailed Description of the Invention

Hot melt adhesives are widely used in packaging industry to seal cardboard cases, trays, and cartons. Some of these operations require hot melt adhesive with exceptional high heat resistance (ability to maintain fiber tear at high temperature) without compromising good cold temperature performance. One example is to package freshly based goods at temperature greater than 60°C (140°F) and its subsequent storage at freezer temperatures of-29°C (-20°F). Another example that requires hot melt adhesives with good heat and cold resistance is in the process of shipping sealed cases, cartons or trays by trucks or railway. The temperature in a truck could be very high (up to 63°C (145°F)) in the summer or very low in the winter-29°C (-20°F). The hot melt adhesives used should be strong enough such that the sealed containers will not pop open during the transportation process.

The invention provides novel low application temperature hot melt adhesives that may advantageously be used as packaging adhesive.

A low application temperature hot melt adhesive is an adhesive that can be applied to a substrate surface at a temperature of less that 149°C (300°F) and then used to bond the substrate to a second substrate surface. Such adhesive do not require heating to temperatures greater than 149°C (300°F) in order to reduce viscosity prior to application.

It has now been discovered that highly hydrogenated oils such as palm and soybean can be converted into a wax (a vegetable derived wax) that can be used effectively as substitutes for conventional waxes in the formulation of low application temperature hot melt adhesive compounds.

A vegetable derived wax Is defined herein as a wax derived from renewable natural resource, such as from a plant source such as soybean, cottonseed, corn, sunflower, canola and palm. More particularly a hydrogenated oil comprising a triglyceride whose fatty acid components have a range of carbon numbers, with stearic acid (C₁₈) being the most predominate. The term "soy wax" is used herein to refer to a wax derived from soybeans.

The low application temperature adhesives of the invention comprise an adhesive base polymer component, a tackifier component and a wax component. In contrast to petroleum or synthetically derived waxes currently used to formulate hot melt adhesives, the adhesives of the invention are formulated using a vegetable derived wax. Examples of vegetable derived waxes include waxes derived from soybean, corn, cottonseed, rape, canola, sunflower, palm, coconut, crambe, linseed and peanut wax. One embodiment uses a soybean derived wax. Soy waxes are derived from fully hydrogenated soy oil and are essentially triglycerides, which may be illustrated as:

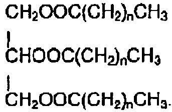

It has now been discovered that low temperature applied hot melt adhesives (applied at temperature between 93 and 149°C (200 and 300°F)), suitable for use as a hot melt packaging adhesive can be formulated using soy waxes. Advantages of using a low application temperature hot melt adhesive includes reduced number and/or capacity of heating elements required in the hot melt adhesive tanks, reduced volatile emissions, reduced risk of burn injury, and reduced wear and tear on the application equipment. While there are currently several low application temperature hot melt adhesives available commercially, such as for example NSC 34-2125 (National Starch and Chemical Company),
NSC 34-250A (National Starch and Chemical Company), NSC 34-650A (National Starch and Chemical Company), HL 7000 (H.B. Fuller), and HL 7002 (H.B. Fuller), none of these low application temperature hot melt adhesives are based on soy wax.

The Invention provides low application temperature hot melt adhesive compositions wherein at least a portion of the wax component is a vegetable derived wax. In one embodiment at least a portion of the wax component is a hydrogenated soy wax. In another embodiment the entire wax component is a vegetable derived wax. The adhesives of the invention are particularly advantageous when used as packaging adhesives. The formulated adhesive will typically have a viscosity of from about 1000 to about 2500 mPas (cps) at 121°C (250°F).

One embodiment of the invention is directed to a hot melt adhesive that may be applied to a substrate in the molten state at a temperature of less that 149°C (300°F), another substrate is brought in contact with the molten adhesive, and upon cooling the substrates are bonded together. In one embodiment the adhesive is applied at 138°C (280°F) or less. In another embodiment the adhesive is applied at 135°C (275°) or less. In still another embodiment the adhesive is applied at 121°C (250°F) or less. In yet another embodiment the adhesive is applied at 93°C (200°F) or less.

As is demonstrated herein, hot melt adhesives based on hydrogenated soy wax, in partial substitution of petroleum or synthetically derived waxes currently widely used in the formulation of hot melt adhesives based on EVA/EnBA blends, show an excellent balance of high and low temperature performance in packaging case and carton adhesives and comparable to petroleum based paraffin wax, use of soy wax provides excellent compatibility with various resins and ethylene copolymers that exhibit longer open times coupled with good heat resistance.

Polymer selection is critical in determining the performance of the formulated hot melt adhesives. A polymer with low glass transition temperature usually shows good cold resistance, while a polymer with high melt temperature is normally easier to formulate adhesives with good heat resistance. The adhesives of the invention will preferably comprise a blend of two or more polymers. Preferred embodiments will comprise EVA and EnBA. Adhesives comprising about 5 wt % to about 30 wt% of an ethylene n-butyl acrylate copolymer containing 28 to 33% butyl acrylate and having a melt index 40 to 900 and about 5 to about 35 wt % of an ethylene vinyl acetate copolymer containing 4 to 33% vinyl acetate and having a melt index of 400 to 2500 comprise one preferred embodiment.

The adhesive compositions of this invention are tackified. The tackifier component will usually be present in an amount of from about 10 wt % to about 45 wt %, more preferably from about 20 wt % to about 50 wt %, even more preferably from about 20 wt % to about 40 wt %. These include natural and synthetic resins. Natural resins include rosin, rosin esters, and polyterpenes. Synthetic resins include C5 cyclic and acyclic resins, aromatic resins, C9 resins, pure monomer resins such as those based on alpha-methyl styrene, and copolymer resins of the above monomers with each other and/or phenol. Preferred embodiments will comprise a tackifier selected from styrenated terpenes, terpene phenolics, aromatic hydrocarbons, aromatic/aliphatic hydrocarbons, hydrogenated tackifiers, or alphamethylstyrene. Adhesives of the invention will typically comprise from about 10 to 45 wt % of a tackifier. Styrenated terpene and terpene phenolic tackifiers are particularly preferred.

The adhesives of the invention are formulated using a vegetable derived wax. Examples of vegetable derived waxes include waxes derived from soybean, corn, cottonseed, rape, canola, sunflower, palm, coconut, crambe, linseed and peanut wax. One embodiment uses a soybean derived wax. Soy waxes a commercially available form Cargill, ADM and Bunge Oils. The soy wax component will typically be used in amounts of from about 5 wt % to about 40 wt %.

In addition to a vegetable derived wax, the formulations of the invention may also comprise a petroleum based or synthetic wax. Waxes suitable for use in the present invention include paraffin waxes, microcrystalline waxes, polyethylene waxes, polypropylene waxes, by-product polyethylene waxes, Fischer-Tropsch waxes, oxidized Fischer-Tropsch waxes and functionalized waxes such as hydroxy stearamide waxes and fatty amide waxes. Paraffin waxes that can be used in the practice of the invention include Okerin® 236 TP available from Astor Wax Corporation, Doraville, GA.; Penreco® 4913 available from Pennzoil Products Co., Houston, TX.; R-7152 Paraffin Wax available from Moore & Munger, Shelton, CN.; and Paraffin Wax 1297 available from International Waxes, Ltd. in Ontario, Canada. Pacemaker available from Citgo, and R-2540 available from Moore and Munger, and other paraffinic waxes such as those available from CP Hall under the product designations 1230, 1236, 1240, 1245, 1246, 1255, 1260, & 1262. CP Hall 1246 paraffinic wax is available from CP Hall (Stow, Ohio). Up to about 20 wt % of paraffin wax may, if desired, by used.

Other compounds could be added that also do not affect physical properties are pigments which add color, or fluorescing agents, to mention only a couple. Additives like these are known to those skilled m the art. Depending on the contemplated end uses of the adhesives, other additives such as plasticizers, pigments and dyestuffs conventionally added to hot melt adhesives might be included. In addition, small amounts of additional tackifiers and/or waxes such as microcrystalline waxes, hydrogenated castor oil and vinyl acetate modified synthetic waxes may also be incorporated in minor amounts, i.e., up to about 10 percent by weight, into the formulations of the present invention.

The adhesives of the present invention will preferably contain a stabilizer or antioxidant. These compounds are added to protect the adhesive from degradation caused by reaction with oxygen induced by such things as heat, light, or residual catalyst from the raw materials such as the tackifying resin. Among the applicable stabilizers or antioxidants included herein are high molecular weight hindered phenols and multifunctional phenols such as sulfur and phosphorous-containing phenol. Antioxidants are typically used in amounts of up to about 1 wt %

### EXAMPLES

All adhesive formulations were prepared in single blade mixer heated to 121°C (250°F) by mixing the components until homogeneous. The adhesives were then subjected to various tests simulating successful commercial applications.

Melt viscosities of hot melt adhesives were determined on a Brookfield Thermosel viscometer using a No. 27 spindle.

Adhesion at 49°C (120°F), room temperature, 4, -7, -18°C (40°F, 20°F, and 0°F) was determined by applying a half inch wide bead of adhesive at 121°C (250°F) (or at 177°C (350°F) for NSC 34-2100) to a 5 x 7,5 cm (2"x3") piece of double fluted corrugated board, and immediately bringing a second piece of corrugated board into contact to form a bond. A 200 g weight was immediately placed on the top of the bond for 2 seconds to provide compression. The specimens prepared were conditioned at room temperature for overnight and then placed in oven or refrigerators at different temperatures for 8 hr. The bonds were separated by hand and the resulting fiber tear was recorded.

The heat stress test (HS) was following the IoPP procedure. Two bonds with glue line dimension of 5 x 1,3 cm (2" x 0.5") were subjected to a 200g or 300 g force, and placed in an oven starting at 49 to 60°C (121°F to 140°F) for 8 hr and 24 hr respectively. The test results were recorded as pass (two bonds past), fail (both bonds failed), or split (one bond past and the other one failed) respectively.

The cloud point temperature is the temperature at which a component begins to solidify or "cloud up" as it cools from a clear homogeneous liquid phase to the semisolid phase. For example, for waxes, the cloud point is usually close to the wax's melting point. Compatibility is related to an adhesive's cloud point, where generally speaking, the lower the cloud point the greater the compatibility.

### Example 1 (not of the invention)

Compatibility of soy wax with adhesive formulations based on ethylene vinyl-acetate copolymers having the formulation shown in Table 1 (Samples 1-5) was tested.

**Table 1**

| | 1 | 2 | 3 | 4 | 5 |
|---|---|---|---|---|---|
| Citgo Pacemaker 53 Wax | | | | | |
| Nat 155 wax | 30.0 | 30.0 | 30.0 | 30.0 | 30.0 |
| EVA (28% VA; 800MI) | 35.0 | 36.0 | 35.0 | 36.0 | 35.0 |
| ENABLE 33900 | | | | | |
| Pinova PNV D-1001 | 35.0 | | | | |
| SYLVALITE RE110L | | 35.0 | | | |
| NOVARES TK110H | | | 35.0 | | |
| EASTOTAC H130R | | | | 35.0 | |
| SYLVARES V2040HM | | | | | 35.0 |
| | 100.0 | 100.0 | 100.0 | 100.0 | I 100.0 |
| Color | Lt. Yellow | Yellow | Yellow | Pale Yellow | Yellow |
| Clarily | Clear | Clear | Clear | Clear | Clear |
| Cloudpoint ('F) ('C) | <135 | <140 | <140 | <135 | <135 |
| Viscosity @ (250°F) 121°C | 2000 | 1850 | 1685 | 2015 | 3025 |
| Adhesion to corrugated board (Weyerhauser) | | | | | |
| (0°F) -18°C | 60/30 | 0 cc | 5 cc | 0 | 40 |
| | 50/30 | 5 cc | 0 cc | 0 | 20 |
| | 70/20 | 0 cc | 0 cc | 0 | 20 |
| (20°F)-7°C | 10 | 20 | 5 | 0 | 35 |
| | 80/60 | 35 | 10 | 0 | 50 |
| | 50130 | 25 | 5 | 0 | 25 |
| (40°F)+4°C | 70/30 | 25 | 25 | 0 | 40 |
| | 60/40 | 15 | 20 | 0 | 70 |
| | 70/50 | 30 | 15 | 0 | 55 |
| RT | 95 | 80 | 45 | 0 | 0 |
| | 95 | 75 | 55 | 0 | 0 |
| | 85 | 80 | 45 | 0 | 0 |
| (120°F) 49°C | 80 | 90 | 60 | 70 | 80 |
| | 95 | 95 | 45 | 85 | 95 |
| | 100 | 96 | 90 | 95 | 95 |
| Heal Stress, °F | | | | | |
| 40°C (105°F), 300 grams | Pass | Pass | Pass | Pass | Pass |
| 43°C (110°F), 300 grams | Pass | Fail | Pass | Split | Pass |
| 46°C (115°F), 300 grams | Pass | Fall | Pass | Fail | Pass |
| 49°C (120°F), 300 grams | Pass | Fail | Split | Fail | Split |
| IoPP Heat Stress | | | | | |
| 52°C (125°F), 100 grams | Pass | Pass | Pass | Pass | Pass |
| 55°C (130°F), 100 grams | Pass | Fall | Fail | Fail | Pass |
| 57°C (135°F), 100 grams | Split | Fail | Fail | Fail | Split |

### Example 2 (not of the invention)

Compatibility of soy wax with adhesive formulations based on ethylene-n-butylacrylate (EnBA) copolymers having the formulation shown in Table 2 (Samples 6-10) was tested.

**Table 2**

| Examples | 6 | 7 | 8 | 9 | 10 |
|---|---|---|---|---|---|
| Nat 155 wax | 30 | 30 | 30 | 30 | 30 |
| EnBA 33/900 | 35 | 35 | 35 | 35 | 35 |
| Pinova PNV D-1001 | 35 | | | | |
| Sylvalite RE 110L | | 35 | | | |
| Novares TK110H | | | 35 | | |
| Eastolac H130R | | | | 35 | |
| V2040HM | | | | | 35 |
| Total | 100 | 100 | 100 | 100 | 100 |
| Color | yellow | amber | amber | yellow | amber |
| Clarity | clear | sl.hazy | clear | clear | clear |
| Cloudpoint | | | | | |
| Viscosity, 121°C (250°F), (cps) | 1920 mPas (cps) | 1805 mPas (cps) | 1642 mPas (cps) | 1985 mPas (cps) | 2695 mPas (cps) |
| Adhesion to corrugated board (Smurlit Stone Corrugated) at Various temperatures | | | | | |
| -18°C (0°F) | 55 sl | 65/35 | 75/65 | 90/80 mod-deep | 90/85 mod-deep |
| | 10 slcc | 15cc | 75/70 | 90/55 sl-mod | 95/80 mod-deep |
| | 55/30 | 70/65 | 75/65 | | 95/75 mod-deep |
| -7°C (20°F) | 70/55 | 25 | 80/60 | 85/60 | 90/75 mod |
| | 15 slcc | 45 sl-mod | 80/65 | 60/55 | 85/70 mod |
| | 5cc | 50 sl-mod | | 75/65 sl-mod | 90/75-80 mod-deep |
| 4°C (40°F) | 85/65-70 | 55 sl | 80/70 | 85/65 mod | 90/85 |
| | 70/65-70 | 70/70 sl-m | 85/75 | 85/65 mod | 100/90 mod-deep |
| | 85/75 | 85/85 mod | 80/70 | 80/70 | 90/80 |
| RT | 40 | 80/75 | 85/65 | 85/80 | 95/80 |
| | 90/75 | 95/80 | 65 | 90/85 | 100/90 |
| | 95/75 | 95/85 | 75/55 | 85/80 | 95/90 |
| 49°C (120°F) | 65/50 coh | 20 | 50/45 | 35 | 80 coh |
| | 80/70 coh | 30 | 50/20 | 30 | 100/90 mod-deep |
| | 80/65 | 35 | 50/50 | 30 | 100/90 mod-deep |
| Heat stress. 300 grams | | | | | |
| 40°C (105°F) | P | F | S | P | P |
| 43°C (110°F) | S | F | F | P | P |
| 46°C (115°F) | F | | | P | |
| IoPP Heat stress, 100 grams | | | | | |
| 51°C (125°F) | P | P | P | P | P |
| 54°C (130°F) | S | S | P | P | S |
| 58°C (135°F) | F | S | P | P | P |

### Example 3 (not of the invention)

Adhesive formulations containing various melting point hydrogenated soy wax In EnBA copolymers having the formulation shown in Table 3 (Samples 11-16) were tested.

**Table 3**

| Examples | 11 | 12 | 13 | 14 | 15 | 16 |
|---|---|---|---|---|---|---|
| Nat 155, CargIII | 30 | | | | | |
| Nat 120, 50928 | | 30 | | | | |
| Nat 125, 50827 | | | 30 | | | |
| Nat 135, 50329 | | | | 30 | | |
| Nat 155, 50907 | | | | | 30 | |
| Nat 180 wax | | | | | | 30 |
| EVA (28% VA, 800MI) | 35 | 35 | 35 | 35 | 35 | 35 |
| Pinova PNV D-1001 | 35 | 35 | 35 | 35 | 35 | 35 |
| Total | 100 | 100 | 100 | 100 | 100 | 100 |
| Color | Yellow | Yellow | Yellow | Yellow | Yellow | Yellow |
| Clarity | Clear | Clear | Clear | Clear | Clear | Clear |
| Cloudpoint | <140F | <140F | <140F | <140F | <140F | <160F |
| Viscosity, 121°C (250°F). (cps) | 2062 mPas (cps) | 2050 mPas (cps) | 2015 mPas (cps) | 2035 mPas (cps) | 2090 mPas (cps) | 2650 |
| Adhesion to corrugated board (Smurfit Stone) | | | | | | |
| -18°C (0°F) | 15cc | 5 | 50 | 75/55 m-d | 35/25 cc | 10cc |
| | 75/65m-d | 5 slcc | 20 cc | 35 cc | 30 cc | 20cc |
| | 45 | 5 | 35 cc | 55 slcc | 75/55 | 5 cc |
| -7°C (20°F) | 55 | 10 | 5 slcc | 40 slcc | 35 slcc | 25 cc |
| | 50 | sl&slcc | 15 slcc | 35 slcc | 25 slcc | 35 |
| | 75/50 mod | 5 slcc | 20 slcc | 55 slcc | 30 cc | 55 |
| +4°C (40°F) | 55 mod | 5 | 95/80 m-d | 85/60 mod | 45 | 55 mod |
| | 70/65 mod | sl | 55 | 85/75 m-d | 40 | 70/65 mod |
| | 50 | 6 | 85/80 m-d | 85/80 m-d | 80/55 | 50 |
| RT | 75/60 | 10 | 85/60 | 90/65 | 55 | 75/60 |
| | 85/70 | 55 | 90/70 | 90/65 | 85/50 | 85/70 |
| | 70/65 | 45/35 | 95/75 | 90/70 | 46 | 70/55 |
| 49°C (120°F) | 70/35 | 0 | 0 | 0 | 90/70 | 90/85 |
| | 85/75 | 0 | 0 | 0 | 85/75 m-d | 95/75 |
| | 85/70 | 0 | 0 | 0 | 85/35 | 95/70 |
| Heat Stress, 300 grams | | | | | | |
| 40°C (105°F) | | F<4hr | F<4hr | F<4hr | | |
| 43°C (110°F) | P | F<2hr | F<2hr | F<2hr | P | P |
| 46°C (115°F) | P | | | | P | P |
| 49°C (120°F) | P | | | | P | P |
| IoPP Heat Stress, 100 grams | | | | | | |
| 52°C (125°F) | P | F<4hr | F<4hr | F<4hr | | |
| 55°C (130°F) | S | F<2hr | F<2hr | F<2hr | P | P |
| 57°C (135°F) | S | | | | P | P |
| 60°C (140°F) | | | | | F | P |

### Example 4

Adhesive formulations containing a blend of soy wax and paraffin having the formulation show in Table 4 (Samples 17-21) were tested.

**Table 4**

| Examples | 17 | 18 | 19 | 20 | 21 |
|---|---|---|---|---|---|
| NAT 155(Lot # 101) | 25 | 25 | 17.5 | 17.5 | 0 |
| Hub 315 Paraffin wax | 10 | | 17.5 | | |
| Calumat FR6513 | | 10 | | 17.5 | 0 |
| Pacemaker 53 Paraffin | | | | | 30 |
| ENABLE EN33900 | 20 | 20 | 20 | 20 | 20 |
| EVA (28% VA, 2500 MI) | 10 | 10 | 10 | 10 | 10 |
| C26-28 alphaolefin | | | | | 5 |
| Pensel GB 120 | 7 | 7 | 7 | 7 | 7 |
| Novares TK-110 | 28 | 28 | 28 | 28 | 28 |
| Total wt | 100 | 100 | 100 | 100 | 100 |
| Color | Yellow | Yellow | Yellow | Yellow | Yellow |
| Clarity | Clear | Clear | Clear | Clear | Clear |
| Viscosity, 93°C, mPas (200°F, cps) | 2210 | 2265 | 2200 | 2090 | 1465 |
| Adhesion to corrugated board (Sumurfit Stone) | | | | | |
| RT | 60,70 | 80,85 | 75,80 | 75,70 | 90, 80 |
| +4°C (40°F) | 75,75 | 70,80 | 70,85 | 85,80 | 85,85 |
| -7°C (20°F) | 50,50 | 60,60 | 70,60 | 75,70 | 80, 85 |
| -18°C (0°F) | 75,70 | 85,85 | 70,75 | 80,85 | 70, 80 |
| Heat stress | | | | | |
| 100gm, IoPP | F 130 (8hrs) | P 130 24hrs) | F130 (3hrs) | F130 (3hrs) | P130 (24hrs) |
| 300gm | F 105 | P 105 | F105 | F106 | P106 |

## Claims

1. A low application temperature applied hot-melt adhesive composition comprising
a) A polymer mixture comprising an ethylene vinyl acetate copolymer and an ethylene n-butyl acrylate copolymer,
b) a tackifier resin, and
c) a wax component which is a blend of a vegetable derived wax and a paraffin wax.

2. The adhesive of claim 1, wherein the vegetable derived wax is selected from the group consisting of soybean, corn, cottonseed, rape, cartola, sunflower, palm, palm kernel, coconut, crambe, linseed and peanut wax.

3. The adhesive of claim 2, wherein the vegetable derived wax is derived from soybean.

4. The adhesive of claim 1, wherein the ethylene vinyl acetate copolymer has a vinyl acetate content of from 4 to 33 wt % and a melt index of from 400 to 2500 g/10 min and wherein the ethylene n-butyl acrylate copolymer has a butyl acrylate content of 28 to 33% and has a melt index of 40 to 900 g/10 min.

5. The adhesive of claim 1, wherein the tackifier resin is selected from the group consisting of styrenated terpenes, terpene phenolics, aromatic hydrocarbons, aromatic/aliphatic hydrocarbons, hydrogenated tackifiers, and alphamethylstyrene.

6. The adhesive of claim 1 comprising
5 to 35 wt % of an ethylene vinyl acetate copolymer having a vinyl acetate content of from 4 to 33 wt % and a melt index of from 400 to 2500 g/10 min,
5 to 30 wt % of an ethylene n-butyl acrylate having a butyl acrylate content of 28 to 33% and a melt index of 40 to 900 g/10 min,
5 to 40 wt % of a soy wax,
up to 20 wt % of a paraffin wax, and
10 to 45 wt % of a styrene terpene tackifier and/or a terpene phenolic tackifier.

7. An article of manufacture comprising the adhesive of claim 1 or claim 6.

8. The article of claim 7 which is a packaging article.

## Patentansprüche

1. Heißschmelzklebstoffzusammensetzung mit niedriger Anwendungstemperatur, umfassend:
a) ein Polymergemisch, umfassend ein Ethylen-Vinylacetat-Copolymer und ein Ethylen-n-Butylacrylat-Copolymer,
b) ein Klebrigmacherharz und
c) eine Wachskomponente, die eine Mischung aus einem von Pflanzen stammenden Wachs und einem Paraffinwachs ist.

2. Klebstoff nach Anspruch 1, wobei das von Pflanzen stammende Wachs ausgewählt ist aus der Gruppe bestehend aus Soja-, Mais-, Baumwollsamen-, Raps-, Canola-, Sonnenblumen-, Palm-, Palmkern-, Kokosnuss-, Crambe-, Leinsamen- und Erdnusswachs.

3. Klebstoff nach Anspruch 2, wobei das von Pflanzen stammende Wachs aus Soja stammt.

4. Klebstoff nach Anspruch 1, wobei das Ethylen-Vinylacetat-Copolymer einen Vinylacetatgehalt von 4 bis 33 Gew.-% und einen Schmelzindex von 400 bis 2500 g/10 min aufweist und wobei das Ethylen-n-Butylacrylat-Copolymer einen Butylacrylatgehalt von 28 bis 33 Gew.-% aufweist und einen Schmelzindex von 40 bis 900 g/10 min aufweist.

5. Klebstoff nach Anspruch 1, wobei das Klebrigmacherharz ausgewählt ist aus der Gruppe bestehend aus styrolisierten Terpenen, Terpenphenolen, aromatischen Kohlenwasserstoffen, aromatischen/aliphatischen Kohlenwasserstoffen, hydrierten Klebrigmachern und alpha-Methylstyrol.

6. Klebstoff nach Anspruch 1, Folgendes umfassend:
5 bis 35 Gew.-% eines Ethylen-Vinylacetat-Copolymers mit einem Vinylacetatgehalt von 4 bis 33 Gew.-% und einem Schmelzindex von 400 bis 2500 g/10 min,
5 bis 30 Gew.-% eines Ethylen-n-Butylacrylats mit einem Butylacrylatgehalt von 28 bis 33 Gew.-% und einem Schmelzindex von 40 bis 900 g/10 min,
5 bis 40 Gew.-% eines Sojawachses,
bis zu 20 Gew.-% eines Paraffinwachses und
10 bis 45 Gew.-% eines Styrolterpen-Klebrigmachers und/oder eines Terpenphenol-Klebrigmachers.

7. Erzeugnis, umfassend den Klebstoff nach Anspruch 1 oder 6.

8. Gegenstand nach Anspruch 7, bei dem es sich um ein Verpackungserzeugnis handelt.

## Revendications

1. Composition adhésive thermofusible à basse température comprenant
a) un mélange de polymères comprenant un copolymère éthylène-acétate de vinyle et un copolymère éthylène-acrylate de n-butyle,
b) une résine collante, et
c) un composant à base de cires qui est un mélange d'une cire dérivée d'un végétal et une cire de paraffine.

2. Adhésif selon la revendication 1, dans lequel la cire dérivée d'un végétal est choisie dans le groupe constitué par le soja, le maïs, le coton, le colza, le canola, le tournesol, le palme, la graine de palme, la noix de coco, le crambe, le lin et la cire d'arachide.

3. Adhésif selon la revendication 2, dans lequel la cire dérivée d'un végétal est dérivée du soja.

4. Adhésif selon la revendication 1, dans lequel le copolymère éthylène-acétate de vinyle a une teneur en acétate de vinyle allant de 4 à 33% en poids et un indice de fusion allant de 400 à 2500 g/ 10 min et dans le copolymère éthylène-acrylate de n-butyle a une teneur en acrylate de butyle allant de 28 à 33% et présente un indice de fusion allant de 40 à 900 g/10 min.

5. Adhésif selon la revendication 1, dans lequel la résine collante est choisie dans le groupe constitué par les terpènes styrénés, les composés phénoliques terpéniques, les hydrocarbures aromatiques, les hydrocarbures aromatiques/aliphatiques, les agents d'adhésivité hydrogénés et l'alphaméthylstyrène.

6. Adhésif selon la revendication 1, comprenant
5 à 35% en poids d'un copolymère éthylène-acétate de vinyle ayant une teneur en acétate de vinyle de 4 à 33% en poids et un indice de fusion de 400 à 2500 g/10 min,
5 à 30% en poids d'un copolymère éthylène-acrylate n-butyle ayant une teneur en acrylate de butyle de 28 à 33% et un indice de fusion de 40 à 900 g/10 min,
5 à 40% en poids d'une cire de soja,
jusqu'à 20% en poids d'une cire de paraffine, et
10 à 45% en poids d'un agent d'adhésivité à base de styrène-terpène et/ou un agent d'adhésivité phénolique terpénique.

7. Article de fabrication comprenant l'adhésif selon la revendication 1 ou la revendication 6.

8. Article selon la revendication 7 qui est un article d'emballage.
